# EUROPEAN PATENT SPECIFICATION

(11) **EP 2 821 847 B1**
(45) Date of publication and mention of the grant of the patent: **24.08.2016**
(21) Application number: 13755854.0
(22) Date of filing: 27.02.2013
(51) Int. Cl.: G02F 1/17, C08L 27/12, G02B 3/14, G02F 1/19

(54) **ELECTROWETTING DEVICE, DISPLAY DEVICE AND LENS**
ELEKTROBENETZUNGSVORRICHTUNG, ANZEIGEVORRICHTUNG UND LINSE
DISPOSITIF D'ÉLECTROMOUILLAGE, DISPOSITIF D'AFFICHAGE, ET LENTILLE

(30) Priority: 28.02.2012 JP 2012041751
(43) Date of publication of application: 07.01.2015
(73) Proprietor: Asahi Glass Company, Limited, Tokyo 100-8405 (JP)
(72) Inventor: NAKAYAMA, Fumiko, Tokyo 100-8405 (JP); ASAKAWA, Akihiko, Tokyo 100-8405 (JP)
(74) Representative: Müller-Boré & Partner Patentanwälte PartG mbB
(86) International application number: PCT/JP2013/055199
(87) International publication number: WO 2013/129503

(56) References cited:
- JP-A- 2009 210 738
- JP-A- 2009 525 502
- Hsiu-Hsiang Chen ET AL: "Low Voltage Electrowetting Optical Deflector", Jpn J Appl Phys, 25 March 2011 (2011-03-25), pages 037202-037202-8, XP055210523, DOI: 10.1143/JJAP.50.037202 Retrieved from the Internet: URL:http://iopscience.iop.org/article/10.1 143/JJAP.50.037202/pdf

## Description

### TECHNICAL FIELD

The present invention relates to an electrowetting device, and a display device and a lens employing it.

### BACKGROUND ART

As a method for controlling wettability of a solid surface, a method of utilizing electrowetting (interfacial electrical phenomenon) is known. An electrowetting device utilizing electrowetting is used for various devices including a display device such as electronic paper, a liquid lens, etc. (e.g. Patent Documents 1 to 3).

As such an electrowetting device, a device is used which is provided with a cell comprising an electrode layer and an insulating membrane sequentially laminated on a substrate, a space provided thereon having two types of fluids different in color and not miscible with each other sealed therein, and a counter electrode disposed in the space. Such a cell is, in many cases, one employing, as the two types of fluids, an aqueous liquid and an oily liquid and, as the insulating membrane, a membrane having water repellency (hydrophobicity). In such a cell in a state where no voltage is applied, the oily liquid forms an oil film covering the entire surface of the insulting membrane. When a voltage is applied between the electrode layer under the insulating membrane and the counter electrode, the wettability of the insulating membrane changes so that the aqueous liquid is drawn towards the insulating membrane, whereby the position and shape of the oily liquid will change, and the area occupied by the oily liquid on the insulating membrane surface will shrink. As the two types of fluids are different in color from each other, as a result of the shrinkage of the area occupied by the oily liquid, the color changes when the cell is observed from above the substrate.

As the material for the insulating membrane, an amorphous fluorinated resin is mainly used since it is excellent in insulating properties, water repellency, transparency, etc.

For example, Patent Documents 2 and 3 disclose, as such amorphous fluorinated polymers, Teflon (registered trademark) AF (copolymer of tetrafluoroethylene and 2,2-bis(trifluoromethyl)-4,5-difluorodioxole) manufactured by DuPont, Cytop (registered trademark, fluorinated polymer obtainable by cyclopolymerization of perfluoro(alkenyl vinyl ether)) manufactured byAsahi Glass Company, Limited, etc.

### PRIOR ART DOCUMENTS

### PATENT DOCUMENTS

Patent Document 1: Japanese Patent No. 4,851,089
Patent Document 2: JP-A-2009-518676
Patent Document 3: JP-A-2009-525502

### DISCLOSURE OF INVENTION

### TECHNICAL PROBLEM

In recent years, an electrowetting device is required to have a high response speed and a long useful life. For the high response speed, a high switching speed between an off-state and an on-state is required, i.e. a high speed in movement of the two fluids on the insulating membrane is required when switching has been done between the off-state and the on-state. The speed in such movement tends to be proportional to the water repellency of the insulating membrane, and accordingly, a high water repellency e.g. a water repellency capable of accomplishing a dynamic sweepback angle of at least 110° is required. Further, for the long useful life, etc., a membrane strength capable of preventing formation of cracks, flaws or peeling, and durability, etc. capable of preventing decrease in water repellency over a long period of time, are of importance.

However, an insulating membrane satisfying all of such requirements has not yet been found. For example, a membrane made of Cytop (registered trademark) is inadequate in water repellency. A membrane made of Teflon (registered trademark) AF is brittle although it is excellent in water repellency. Therefore, decrease in the water repellency with time is likely, and particularly in the presence of water, especially warm water, the decrease in water repellency tends to be remarkable.

The present invention has been made in view of the above situations, and it is an object of the present invention to provide an electrowetting device provided with a membrane excellent in water repellency, membrane strength and durability, and a display device and a lens, provided with such an electrowetting device.

### SOLUTION TO PROBLEM

The present invention provides an electrowetting device, a display device and a lens, having constructions of the following [1] to [14].
[1] An electrowetting device comprising a space to contain fluids, two types of fluids that form an interface in the space, a membrane that is in contact with the space, a first electrode disposed on the opposite side of the membrane from the side in contact with the space, and a second electrode that is in contact with one of the two types of fluids, wherein said membrane is a single membrane consisting of a layer (M) made of a mixture of a fluorinated polymer (A) that includes, as the main component, a constituting unit including a fluorinated aliphatic ring structure having one etheric oxygen atom in the ring structure, and a fluorinated polymer (B) that includes, as the main component, a constituting unit including a fluorinated aliphatic ring structure having two or three etheric oxygen atoms in the ring structure, or a multilayer membrane wherein said layer (M) is disposed as the outermost layer on the side in contact with the space.
[2] The electrowetting device according to [1], wherein each of the fluorinated polymer (A) and the fluorinated polymer (B) is a fluorinated polymer containing the respective fluorinated aliphatic ring on its main chain.
[3] The electrowetting device according to [1] or [2], wherein in the layer (M), the mass ratio (A/B) of the fluorinated polymer (A) to the fluorinated polymer (B) is from 10/90 to 99/1.
[4] The electrowetting device according to any one of [1] to [3], wherein the constituting unit including a fluorinated aliphatic ring structure in the fluorinated polymer (A) is a constituting unit obtained by cyclopolymerizing a perfluorodiene having one etheric oxygen atom.
[5] The electrowetting device according to [4], wherein the perfluorodiene having one etheric oxygen atom is a fluorinated compound represented by the following formula (a1): 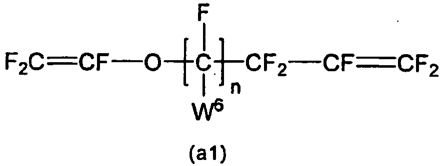 wherein W⁶ is a fluorine atom or a C₁₋₃ perfluoroalkyl group, and n is 0 or 1.
[6] The electrowetting device according to any one of [1] to [5], wherein said membrane is the multilayer membrane which further contains a layer (A) made of said fluorinated polymer (A).
[7] The electrowetting device according to [6], wherein the fluorinated polymer (A) constituting the layer (A) is a fluorinated polymer (A^{C}) having at least one type of functional group selected from the group consisting of a carboxy group, an alkoxycarbonyl group and an aminoalkyl group.
[8] The electrowetting device according to [7], wherein the membrane contains a plurality of the layers (A), at least one layer among them is a layer (A^{C}) made of the fluorinated polymer (A^{C}), at least one other layer is a layer (A^{F}) made of a fluorinated polymer (A^{F}) that is a fluorinated polymer (A) having no functional group, and the layer (A^{F}) is disposed between the layer (A^{C}) and the layer (M).
[9] The electrowetting device according to any one of [1] to [8], wherein the constituting unit including a fluorinated aliphatic ring structure in the fluorinated polymer (B) is a constituting unit obtained by polymerizing a monomer having a fluorinated aliphatic ring structure that has two oxygen atoms as atoms constituting the ring, wherein at least one carbon atom constituting the ring is a carbon atom constituting a polymerizable double bond.
[10] The electrowetting device according to [9], wherein the monomer having a fluorinated aliphatic ring structure is a fluorinated compound represented by the following formula (b1) or a fluorinated compound represented by the following formula (b2): 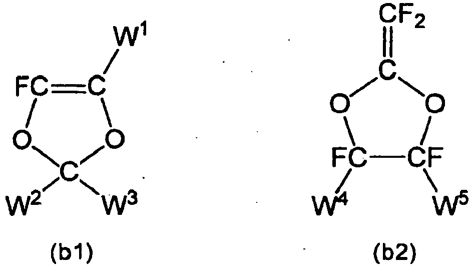 wherein W¹ is a fluorine atom, a C₁₋₃ perfluoroalkyl group or a C₁₋₃ perfluoroalkoxy group, each of W² and W³ which are independent of each other, is a fluorine atom, a C₁₋₆ perfluoroalkyl group, a C₁₋₆ perfluoroalkoxy group or a C₂₋₆ perfluoroalkyl group having an etheric oxygen atom, or W² and W³ are bonded to each other to form a C₂₋₆ perfluoroalkylene group which may have an etheric oxygen atom, and each of W⁴ and W⁵ which are independent of each other, is a fluorine atom, a C₁₋₈ perfluoroalkyl group, a C₁₋₈ perfluoroalkoxy group or a C₂₋₈ perfluoroalkyl group having an etheric oxygen atom, or W⁴ and W⁵ are bonded to each other to form a C₂₋₆ perfluoroalkylene group which may have an etheric oxygen atom.
[11] The electrowetting device according to [10], wherein the fluorinated compound represented by the formula (b1) is perfluoro(2,2-dimethyl-1,3-dioxole), and the fluorinated compound represented by the formula (b2) is perfluoro(2-methylene-1,3-dioxolane) or perfluoro(2-methylene-4-methyl-1,3-dioxolane).
[12] The electrowetting device according to any one of [1] to [11], wherein the thickness of the membrane is from 0.2 to 6 µm.
[13] A display device provided with the electrowetting device as defined in any one of [1] to [12].
[14] A lens provided with the electrowetting device as defined in any one of [1] to [12].

### ADVANTAGEOUS EFFECTS OF INVENTION

The display device and the lens of the present invention are excellent in water repellency, membrane strength and durability of the membrane.

### BRIEF DESCRIPTION OF DRAWINGS

Fig. 1 is a schematic cross-sectional view of an electrowetting device in one embodiment of the present invention, and shows a state (off-state) where no voltage is applied between the first electrode and the second electrode.
Fig. 2 shows a state (on-state) where a voltage is applied between the first electrode and the second electrode in the schematic cross-sectional view of an electrowetting device as shown in Fig. 1.

### DESCRIPTION OF EMBODIMENTS

In this specification, a compound represented by the formula (a) is referred to also as a compound (a), and a constituting unit represented by the formula (A) is referred to also as a constituting unit (A). Compounds and constituting units represented by other formulae are also referred to in the same manner.

In this specification, an "aliphatic ring structure" means a saturated or unsaturated ring structure having no aromaticity.

A "fluorinated aliphatic ring structure" means an aliphatic ring structure wherein a fluorine atom or a fluorinated group is bonded to at least some of carbon atoms constituting the main skeleton of the ring. The fluorinated group may, for example, be a perfluoroalkyl group, a perfluoroalkoxy group, a =CF₂ group, etc.

An "etheric oxygen atom" is one oxygen atom between carbon-carbon atoms (-CO-C-).

A "fluorinated aliphatic ring structure having two or three etheric oxygen atoms in the ring structure" means a fluorinated aliphatic ring structure wherein two or three etheric oxygen atoms are bonded via at least one carbon atom to form the ring.

A "perfluorodiene" is a chain-form perfluoro compound having two polymerizable double bonds, which may have an etheric oxygen atom.

A "constituting unit derived from a compound" means a constituting unit formed by polymerization of a compound (monomer).

In the present invention, a fluorinated polymer "containing a fluorinated aliphatic ring structure on the main chain" is meant to be a fluorinated polymer wherein in the main chain of a polymer made of a chain of carbon atoms, at least one of carbon atoms constituting the ring of a fluorinated aliphatic ring is a carbon atom constituting the main chain.

### [Electrowetting device]

The electrowetting device of the present invention (hereinafter sometimes referred to simply as the "EW device") comprises a space to contain fluids, two types of fluids that form an interface in the space, a membrane in contact with the space, a first electrode disposed on the opposite side of the membrane from the side in contact with the space, and a second electrode in contact with one of the two types of fluids, wherein said membrane is a single membrane consisting of a layer (M) made of a mixture of a fluorinated polymer (A) that includes, as the main component, a constituting unit including a fluorinated aliphatic ring structure having one etheric oxygen atom in the ring structure, and a fluorinated polymer (B) that includes, as the main component, a constituting unit including a fluorinated aliphatic ring structure having two or three etheric oxygen atoms in the ring structure, or a multilayer membrane wherein said layer (M) is disposed as the outermost layer on the side in contact with the space.

The construction of the EW device of the present invention will be described with reference to an embodiment shown in the drawings.

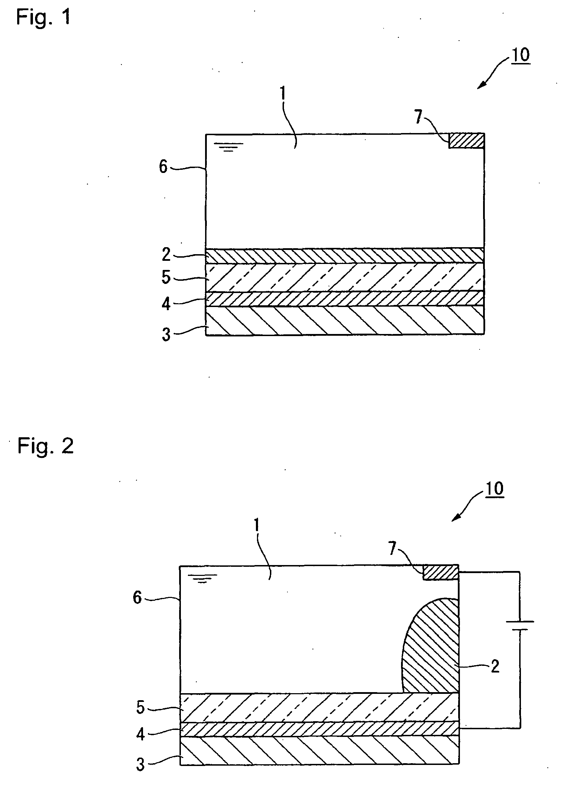

Figs. 1 and 2 show one embodiment of the EW device of the present invention. This embodiment is an example wherein a transparent electrically-conductive aqueous liquid is used as one (first fluid 1) of the two types of fluids, and a colored non-electrically-conductive oily liquid is used as the other (second fluid 2). Figs. 1 and 2 are schematic cross-sectional views of the EW device 10 of this embodiment. Here, Fig. 1 shows a state (off-state) where no voltage is applied between a first electrode 4 and a second electrode 7, in the EW device 10. Fig. 2 shows a state (on-state) where a voltage is applied between the first electrode 4 and the second electrode 7, in the EW device 10.

The EW device 10 of this embodiment comprises a substrate 3, a transparent first electrode 4 provided on one side of the substrate 3, a transparent membrane 5 provided on the first electrode 4, a space 6 provided on the membrane 5 and a second electrode 7 provided in the space 6. In the space 6, the first fluid 1 and the second fluid 2 are contained, and the second electrode 7 is in contact with the first fluid 1.

The term "transparent" means to transmit light in a visible light region (300 to 800 nm). The light transmittance in the visible light region is preferably from 80 to 100%, particularly preferably from 90 to 100%.

When the EW device 10 is in an off-state, as shown in Fig. 1, the second fluid 2 forms a continuous film between the first fluid 1 and the membrane 5. This is due to the fact that the second fluid 2 has a lower surface tension than the first fluid 1, and this state corresponds to the lowest level in the energy state of the system.

When the device is switched from the off-state to an on-state to create a potential difference on the membrane 5, the first fluid 1 will be drawn to the membrane 5 and will be in contact with the membrane 5, whereby the energy level of the system will be lowered. And, as pushed by the first fluid 1, the second fluid 2 will move in the horizontal direction (in the parallel direction to the surface of the membrane 5, to the right-hand side in the drawings), whereby the proportion occupied by the second fluid 2 on the surface of the membrane 5 will decrease. If the proportion occupied by the second fluid 2 is sufficiently small, the color of the second fluid 2 will be invisible when the membrane 5 is observed from above (in the vertical direction to the surface of the membrane 5, from the upper side in the drawings).

Thus, by switching between the off-state and the on-state, switching is possible between the state where the color of the second fluid 2 is visible, and the state where it is invisible.

Here, to what extent the second fluid 2 moves, is determined by the intensity of the electric field given by the application of a voltage and the balance between the interfacial tensions of the first and second fluids (the difference between the surface tension of the first fluid and the surface tension of the second fluid).

In the EW device, the voltage to be applied between the first electrode 4 and the second electrode 7 is usually at a level of from 100 to 300V.

The aqueous liquid to be used as the first liquid 1 may, for example, be water, a mixed solvent of water and a water-soluble organic solvent, or an aqueous solution having an additive such as an electrolyte dissolved therein. The water-soluble organic solvent may be one which becomes uniform when mixed with water, and is, for example, an alcohol.

The oily liquid to be used as the second fluid 2 may, for example, be a C₁₀₋₁₇ saturated hydrocarbon (such as an alkane or a cycloalkane) or silicone oil.

The colorant to be used for coloring the oily liquid is not particularly limited, and in consideration of the desired color, etc., it may suitably be selected from known pigments, dyes, etc.

In order to avoid an influence of the gravity or inertia, as the first fluid 1 and the second fluid 2, ones having substantially the same density are used.

The material for the substrate 3 is preferably an insulating material. The resistance value of the insulating material is preferably at least 10¹⁰Ωcm, particularly preferably at least 10¹²Ωcm, by volume resistivity value.

The insulating material to constitute the substrate 3 may be transparent or may not be transparent.

In a case where the substrate 3 is transparent, since the first electrode 4 and the membrane 5 are transparent, light from outside of the substrate (the opposite side from the side where the first electrode 4 is provided, the lower side in the drawings) passes through the substrate 3, the first electrode 4 and the membrane 5 and enters the space 6, and therefore, such an EW device 10 may be used for a transmissive type display device, a lens or the like.

In a case where the substrate 3 is not transparent (e.g. is white-colored), since the first electrode 4 and the membrane 5 are transparent, light from the upper side of the space 6 (the opposite side from the side where the membrane 5 is provided, the upper side in the drawings) passes through the membrane 5 and the first electrode 4 and is reflected by the substrate 3, and therefore, such an EW device may be used for a reflective type display device or the like.

Specifically, the transparent insulating material may, for example, be an inorganic material such as glass, ceramics or the like, or an organic polymer material such as polyethylene terephthalate, polyethylene naphthalate, polyimide, polycarbonate, an acrylic resin, polyether sulfone or the like. Among them, glass is preferred.

As an insulating material which is not transparent, one having an additive such as a colorant or a light-scattering agent blended to the above insulating material may be mentioned. For example, by using a transparent resin as the insulating material, if a light-scattering agent made of a material different in the refractive index from the resin, is blended thereto, light entered into the substrate 3 will be scattered, and when visually observed from the upper side of the space 6 (the upper side in the drawings), the background (the portion where the second fluid 2 is not present) looks white.

The substrate 3 may be one composed of a single layer or one composed of plural layers. For example, it may be a laminate obtained by laminating a layer having the above additive incorporated and a layer having no such an additive incorporated.

Each of the first electrode 4 and the second electrode 7 is made of an electrically-conductive material.

The resistance value of the electrically-conductive material is preferably at most 0.1 Ωcm, particularly preferably at most 0.01 Ωcm, by volume resistivity value.

The electrically-conductive material is not particularly limited, and a known material commonly used as a material for electrodes may be used. Specifically, a metal such as gold, silver, copper, nickel, chromium, aluminum, titanium, tungsten, molybdenum, tin, cobalt, palladium, platinum or an alloy containing at least one of these as the main component; a metal oxide such as ITO (indium tin oxide), IZO (indium zinc oxide), zinc oxide, titanium dioxide or tin oxide; an organic conductive material such as polyaniline, polypyrrole, PEDOT/PSS or carbon nanotube; etc. may be mentioned. Among them, as the electrically-conductive material to constitute the first electrode, a metal oxide excellent in transparency is preferred, and ITO (indium tin oxide) is particularly preferred.

Each of the first electrode 4 and the second electrode 7 may be one composed of a single layer or one composed of plural layers, or may have a construction having a distribution in its composition.

The first electrode 4 may be a thin film (solid coating) covering the entire surface of the substrate 3, or a patterned film having patterning applied to such a thin film. In the case of a patterned film, the substrate 3 and the membrane 5 are partially in contact directly with each other.

The membrane (5) is a single membrane consisting of a layer (M) made of a mixture of a fluorinated polymer (A) that includes, as the main component, a constituting unit including a fluorinated aliphatic ring structure having one etheric oxygen atom in the ring structure, and a fluorinated polymer (B) that includes, as the main component, a constituting unit including a fluorinated aliphatic ring structure having two or three etheric oxygen atoms in the ring structure, or a multilayer membrane wherein such a layer (M) is disposed as the outermost layer on the side in contact with the space 6.

The fluorinated polymer (A) is excellent in membrane strength and durability, but poor in water repellency. The fluorinated polymer (B) is excellent in water repellency, but poor in strength and durability. If the membrane 5 is made of their mixture, it is usually expected that the water repellency, membrane strength and durability will be, respectively, at intermediate values of the fluorinated polymers (A) and (B), but, surprisingly, their drawbacks are complemented without losing their merits, and all of the water repellency, membrane strength and durability become sufficiently satisfactory.

The fluorinated polymers (A) and (B) contained in the layer (M) may, respectively, be of one type, or two or more types.

The fluorinated polymers (A) and (B) will be described later in detail, respectively. However, the layer (M) preferably contains, as the fluorinated polymer (A), a fluorinated polymer (A^{F}) which does not have a functional group which will be described later. As the fluorinated polymer (A^{F}) does not have the functional group, higher water repellency is obtainable as compared with a case where it has the functional group.

The fluorinated polymer (A^{F}) is obtainable, for example, by cyclopolymerizing a perfluorodiene represented by the formula (a1). Further, a commercial product such as Cytop S (trade name, manufactured by Asahi Glass Company, Limited) may be employed.

The fluorinated polymer (A^{F}) contained in the layer (M) may be of one type, or two or more types.

The mass ratio (A/B) of the fluorinated polymer (A) to the fluorinated polymer (B) in the layer (M) is preferably from 10/90 to 99/1, more preferably from 10/90 to 97/3, further preferably from 10/90 to 95/5, particularly preferably from 30/70 to 95/5. When A/B is at most the upper limit value in the above range, the water repellency will be excellent. When A/B is at least the lower limit value in the above range, the membrane strength and durability will be excellent.

In a case where the membrane 5 is a multilayer membrane, the layer (M) which the membrane 5 has, may be a single layer or a plurality of layers. For example, it may have, as the layer (M), a plurality of layers different in at least one of the type of the fluorinated polymer (A), the type of the fluorinated polymer (B) and their mass ratio (A/B). However, at least as the outermost layer on the side in contact with the space 6, the layer (M) is disposed.

The number of layers (M) in the membrane 5 is preferably 1 to 2, particularly preferably 1, from the viewpoint of the productivity and planarity.

The thickness of one layer of layer (M) is preferably from 0.1 to 3 µm, particularly preferably from 0.1 to 2 µm. When it is at least the lower limit value in the above range, the membrane will be excellent in water repellency, and when it is at most the upper limit value within the above range, the productivity and planarity will be excellent.

The total thickness of layer (M) is preferably from 0.1 to 3 µm, particularly preferably from 0.1 to 2 µm. When it is at least the lower limit value in the above range, the membrane will be excellent in water repellency, and when it is at most the upper limit value within the above range, the productivity and planarity will be excellent.

In a case where the membrane 5 is a multilayer membrane, the membrane 5 preferably contains, in addition to the layer (M), a layer (an adhesion-improving layer) to improve the adhesion between the layer (M) and the substrate 3 or the first electrode 4.

Such an adhesion-improving layer may, for example, be a layer (A) made of a fluorinated polymer (A), or a silane coupling agent layer.

Among them, the layer (A) is good in adhesion to the layer (M), since it contains a fluorinated polymer (A). Further, since it does not contain a fluorinated polymer (B), it is flexible as compared with the layer (M). Therefore, by providing the layer (A), a trouble such as detachment of the layer (M) is less likely to occur, and the membrane strength will be further improved.

The layer (A) which the membrane 5 has, may be a single layer or a plurality of layers. For example, it may have a plurality of layers (A) different in the type of the fluorinated polymer (A).

The number of layers (A) in the membrane 5 is preferably 1 to 2, particularly preferably 1 or 2, from the viewpoint of the productivity and planarity.

The thickness of one layer of layer (A) is preferably from 0.2 to 3 µm, particularly preferably from 0.2 to 2 µm. When it is at least the lower limit value in the above range, the adhesion and membrane strength will be excellent, and when it is at most the upper limit value within the above range, the productivity and planarity will be excellent.

The total thickness of layers (A) is preferably from 0.2 to 3 µm, particularly preferably from 0.2 to 2 µm. When it is at least the lower limit value in the above range, the adhesion and membrane strength will be excellent, and when it is at most the upper limit value within the above range, the productivity and planarity will be excellent.

In a case where the membrane 5 has the layer (A), the total thickness of layers (M) in the membrane 5 is preferably at most 150%, particularly preferably at most 100%, of the total thickness of layers (A). When the total thickness of layers (M) is adjusted to be at most the upper limit value in the above range, the adhesion and membrane strength will be further improved. The lower limit is not particularly limited, but from the viewpoint of the water repellency and durability, it is preferably at least 5%, particularly preferably at least 10%, of the total thickness of layers (A).

The layer (A) is preferably a layer (A^{C}) made of a fluorinated polymer (A^{C}) that is a fluorinated polymer (A) having the after-described functional group. As the fluorinated polymer (A^{C}), particularly preferred is a fluorinated polymer which contains, as the main component, a constituting unit obtained by cyclopolymerization of a perfluorodiene having one etheric oxygen atom and which, at the same time, has a carboxy group. Here, the carboxy group may be in the form of a salt.

As the layer (A^{C}) is made of a fluorinated polymer (A) having a functional group, the adhesion to the substrate 3 or the first electrode 4 is excellent. Therefore, the adhesion between the layer (M) and the substrate 3 or the first electrode 4 will be high, and the membrane strength, durability, etc. will be further improved.

In such a case, the layer (A) in the membrane may be constituted solely by the layer (A^{C}). Further, in a case where the membrane contains a plurality of layers (A), it may contain a layer (A^{C}) and other layer made of a fluorinated polymer (A) other than the fluorinated polymer (A^{C}), provided that the layer (A^{C}) is preferably disposed on the side closest to the first electrode 4 among layers (A).

The fluorinated polymer (A^{C}) may be obtained, for example, by a method of introducing a functional group as will be described later about the fluorinated polymer (A). Further, a commercial product such as Cytop A (trade name) manufactured by Asahi Glass Company, Limited, may be employed.

The fluorinated polymer (A^{C}) contained in the layer (A^{C}) may be of one type, or two or more types.

In a case where the membrane contains a plurality of layers (A), it preferably contains a layer (A^{C}) and a layer (A^{F}) made of the above-mentioned fluorinated polymer (A^{F}). In such a case, the layer (A^{F}) is preferably disposed between the layer (A^{C}) and the layer (M).

The layer (A^{F}) does not have the after-described functional group, and therefore, it has high water repellency as compared with the layer (A^{C}) having such a functional group and is excellent in adhesion to the layer (M). Therefore, by providing the layer (A^{F}), the adhesion between the layer (A^{C}) and the layer (M), as well as the adhesion between the layer (M) and the substrate 3 or the first electrode 4, will be further improved, and the membrane strength, durability, etc. will be further improved.

In such a case, the layer (A) in the membrane may be constituted solely by the layers (A^{C}) and (A^{F}). Otherwise, the membrane may contain, together with these two layers, other layer made of a fluorinated polymer (A) other than the fluorinated polymers (A^{C}) and (A^{F}).

The fluorinated polymer (A^{F}) contained in the layer (A^{F}) may be of one type, or two or more types. Further, in a case where the layer (M) contains a fluorinated polymer (A^{F}), the fluorinated polymer (A^{F}) contained in the layer (M) and the fluorinated polymer (A^{F}) contained in the layer (A^{F}) may be the same or different.

It is also preferred that the layer (A) is a layer (A^{CF}) made of a mixture of the fluorinated polymers (A^{C}) and (A^{F}).

The layer (A^{CF}) has both functions of the fluorinated polymers (A^{C}) and (A^{F}).

In such a case, the layer (A) may be composed solely of the layer (A^{CF}). Further, in a case where the membrane contains a plurality of layers (A), either one or both of layers (A^{C}) and (A^{F}) and a layer (A^{CF}) may be contained, or a layer (A^{CF}) and another layer made of a fluorinated polymer (A) other than the fluorinated polymers (A^{C}) and (A^{F}) may be contained.

Each of the layer (M) and the layer (A) (such as the layer (A^{C}), (A^{F}) or (A^{CF})) may be formed from a composition comprising the corresponding fluorinated polymer and a silane coupling agent. It is thereby possible to further improve the adhesion and durability.

In such a case, the silane coupling agent may be reacted with the fluorinated polymer contained in the composition to form a composite.

The silane coupling agent is not particularly limited, and a known agent may be employed. Particularly preferred is one capable of forming a composite by a reaction with a fluorinated polymer contained in the layer or with a fluorinated polymer contained in an adjacent layer. For example, in a case where the layer contains a fluorinated polymer (A^{C}), or the adjacent layer contains a fluorinated polymer (A^{C}), preferred is one having a reactive functional group that is reactive with a functional group (such as a carboxy group, an alkoxycarbonyl group or an aminoalkyl group) of the fluorinated polymer (A^{C}). For example, as the reactive functional group that is reactive with a carboxy group, an amino group, an epoxy group or an acryl group may, for example, be mentioned. Among them, an amino group is preferred. That is, as the silane coupling agent, a silane coupling agent having an amino group (hereinafter referred to as an "aminosilane coupling agent") is preferred. The number of amino groups which the aminosilane coupling agent has, may be 1, or 2 or more.

As the aminosilane coupling agent, the following compounds may, for example, be mentioned.

A dialkoxysilane such as 3-aminopropylmethyldiethoxysilane, 3-aminopropylmethyldimethoxysilane, N-(2-aminoethyl)-3-aminopropylmethyldimethoxysilane or N-(2-aminoethyl)-3-aminopropylmethyldiethoxysilane,

A trialkoxysilane such as 3-aminopropyltrimethoxysilane, 3-aminopropyltriethoxysilane, N-(2-aminoethyl)-3-aminopropyltrimethoxysilane or N-(2-aminoethyl)-3-aminopropyltriethoxysilane.

Further, a silane coupling agent having an aromatic amine structure, such as the following compound (s1) or (s2) may be mentioned.

ArSi(OR¹)(OR²)(OR³) (s1)

ArSiR⁴(OR¹)(OR²) (s2)

In the above formulae, each of R¹ to R⁴ which are independent of one another, is a hydrogen atom, a C₁₋₂₀ alkyl group or an aryl group, and Ar is a p-, m- or o-aminophenyl group.

As specific examples of the compounds (s1) and (s2), the following compounds may be mentioned.

Aminophenyltrimethoxysilane, aminophenyltriethoxysilane, aminophenyltripropoxysilane, aminophenyltriisopropoxysilane, aminophenylmethyldimethoxysilane, aminophenylmethyldiethoxysilane, aminophenylmethyldipropoxysilane, aminophenylmethyldiisopropoxysilane, aminophenylphenyldimethoxysilane, aminophenylphenyldiethoxysilane, aminophenylphenyldipropoxysilane, aminophenylphenyldiisopropoxysilane, etc.

Further, it is also preferred to use a partially hydrolyzed condensate of such an aminosilane coupling agent.

Further, it is also preferred to use a co-partially hydrolyzed condensate of such an aminosilane coupling agent and a tetraalkoxysilane such as tetramethoxysilane, tetraethoxysilane or tetrapropoxysilane.

In view of easy availability, etc., the particularly preferred aminosilane coupling agent is at least one member selected from the group consisting of 3-aminopropylmethyldiethoxysilane, 3-aminopropylmethyldimethoxysilane, N-(2-aminoethyl)-3-aminopropylmethyldimethoxysilane, N-(2-aminoethyl)-3-aminopropylmethyldiethoxysilane, 3-aminopropyltrimethoxysilane, 3-aminopropyltriethoxysilane, N-(2-aminoethyl)-3-aminopropyltrimethoxysilane, N-(2-aminoethyl)-3-aminopropyltriethoxysilane and aminophenyltrimethoxysilane.

As the silane coupling agent, one type may be used alone, or two or more types may be used in combination.

The content of the silane coupling agent in the composition comprising the fluorinated polymer and the silane coupling agent is preferably from 0.1 to 10 mass%, particularly preferably from 1 to 3 mass%, to the total amount of the fluorinated polymer and the silane coupling agent. When it is at least the lower limit value in the above range, the adhesion is improved. When it is at most the upper limit value in the above range, the storage stability of the composition comprising the fluorinated polymer and the silane coupling agent is good.

The membrane 5 may contain, in addition to the layers (M) and (A), other layer (hereinafter referred to also as a "layer (C)").

The layer (C) may, for example, be a layer made of the above-mentioned fluorinated polymer (B), or a silane coupling agent layer.

In the present invention, it is particularly preferred that the membrane 5 has a silane coupling agent layer as the outermost layer on the substrate 3 side (the first electrode 4 side). It is thereby possible to further improve the adhesion of the membrane 5 to the substrate 3 or the first electrode 4. Such an effect is distinct in a case where the layer adjacent to the silane coupling agent layer contains a fluorinated polymer (A^{C}). Therefore, the layer in contact with the silane coupling agent layer in the membrane 5 is preferably a layer (A^{C}), a layer (A^{CF}) or a layer (M) containing, as the fluorinated polymer (A), a fluorinated polymer (A^{C}).

The silane coupling agent to be used for forming the silane coupling agent layer may be the same as mentioned above.

The thickness of the silane coupling agent layer is preferably from 1 to 100 nm, particularly preferably from 1 to 50 nm, from the viewpoint of the adhesion and transparency.

As preferred forms of the membrane 5, the following (1) to (8), etc. may be mentioned.
(1) A single layer membrane consisting of a layer (M)
(2) A double layer membrane wherein a layer (M) and a layer (A^{C}) are directly laminated sequentially from the space 6 side.
(3) A three layer membrane wherein a layer (M), a layer (A^{F}) and a layer (A^{C}) are directly laminated sequentially from the space 6 side.
(4) A double layer membrane wherein a layer (M) and a layer (A^{CF}) are directly laminated sequentially from the space 6 side.
(5) A double layer membrane wherein a layer (M) and a silane coupling layer are directly laminated sequentially from the space 6 side.
(6) A three layer membrane wherein a layer (M), a layer (A^{C}) and a silane coupling agent layer are directly laminated sequentially from the space 6 side.
(7) A laminate having a four layer membrane wherein a layer (M), a layer (A^{F}), a layer (A^{C}) and a silane coupling agent layer are directly laminated sequentially from the space 6 side.
(8) A three layer membrane wherein a layer (M), a layer (A^{CF}) and a silane coupling agent layer are directly laminated sequentially from the space 6 side.

In these forms, each of the layers (M), (A^{F}), (A^{C}) and (A^{CF}) may be formed from a composition comprising the corresponding fluorinated polymer and a silane coupling agent.

As the form of the membrane 5, among the above, (4), (5), (6), (7) or (8) is preferred, and (5), (6), (7) or (8) is particularly preferred.

In the case of a single layer membrane, the thickness (the entire thickness) of the membrane 5 is preferably from 0.1 to 3 µm, particularly preferably from 0.1 to 2 µm. In the case of a multilayer membrane, it is preferably from 0.2 to 6 µm, particularly preferably from 0.2 to 4 µm. When it is at least the lower limit value in the above range, the water repellency will be excellent, and when it is at most the upper limit value in the above range, the productivity and planarity will be excellent.

### <Fluorinated polymer (A)>

The fluorinated polymer (A) includes, as the main component, a constituting unit (hereinafter referred to also as a "constituting unit (A1)") including a fluorinated aliphatic ring structure having one etheric oxygen atom in the ring structure.

The fluorinated polymer (A) includes, as the main component, a constituting unit (A1), whereby it is excellent in membrane strength, durability against water, etc., flexibility, etc. Further, it is an amorphous polymer, whereby its transparency is high.

The fluorinated polymer (A) is preferably a fluorinated polymer having the fluorinated aliphatic ring in its main chain. In a constituting unit obtainable by cyclopolymerizing a perfluorodiene, at least two carbon atoms among the total of four carbon atoms constituting polymerizable double bonds and atoms between the polymerizable double bonds (provided that atoms in a branched moiety is excluded) constitute an aliphatic ring, and at least two carbon atoms among the total of four carbon atoms constituting polymerizable double bonds serve as carbon atoms that constitute the main chain of the polymer.

As the perfluorodiene, preferred is a perfluorodiene having one or two etheric oxygen atoms between the polymerizable double bonds (provided that a branched moiety is excluded), and a perfluorodiene having one etheric oxygen atom is particularly preferred. That is, as the constituting unit (A1), preferred is a constituting unit obtainable by cyclopolymerizing a perfluorodiene having one etheric oxygen atom.

As a perfluorodiene having one etheric oxygen atom, the following compound (a1) is preferred from the viewpoint of the membrane strength and durability.

When the compound (a1) is cyclopolymerized, the following units (A1-1) to (A1-4), etc. will be formed. By the cyclopolymerization, a 5-membered aliphatic ring is likely to be formed, and thus, in a case where n is 1, a constituting unit (A1-1) is likely to be formed, and in a case where n is 0, a constituting unit (A1-2) or (A1-3) is likely to be formed. For example, when a compound (a1) wherein n is 1, is cyclopolymerized, a polymer composed solely of constituting units (A1-1) or a polymer composed mainly of constituting units (A1-1) and containing at least one type of constituting units (A1-2) to (A1-4) is likely to be formed.

The following formula (a 11) is one wherein the four carbon atoms constituting polymerizable double bonds of a perfluorodiene in the above formula (a1) are represented by C^{a}, C^{b}, C^{c} and C^{d}. The carbon atoms in the constituting units (A1-1) to (A1-4) corresponding to such carbon atoms in the perfluorodiene are likewise represented by C^{a}, C^{b}, C^{c} and C^{d}.

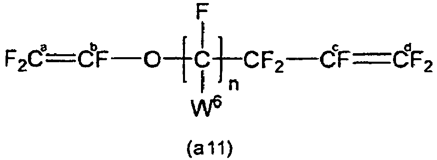

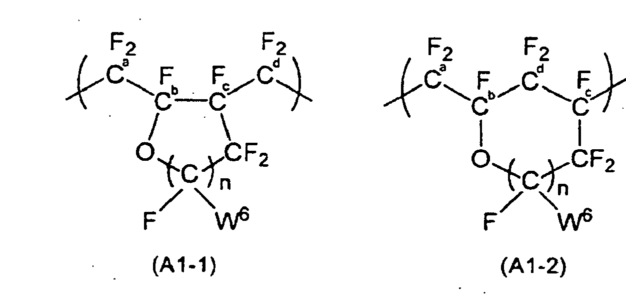

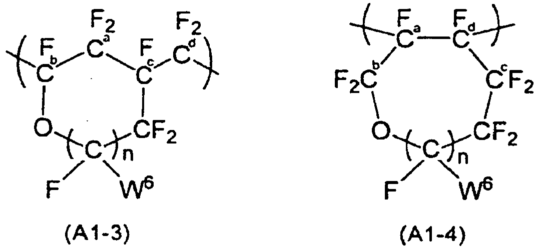

In the formula (a1) and the formulae (A1-1) to (A1-4), W⁶ is a fluorine atom or a C₁₋₃ perfluoroalkyl group. From the viewpoint of the durability, W⁶ is preferably a fluorine atom. From the viewpoint of the water repellency, W⁶ is preferably a C₁₋₃ perfluoroalkyl group. n is 0 or 1.

The four carbon atoms C^{a}, C^{b}, C^{c} and C^{d} in the formulae (A1-1) to (A1-3) are carbon atoms constituting a ring and at the same time, carbon atoms constituting the main chain of the polymer. The two carbon atoms C^{a} and C^{d} in the formula (A1-4) are carbon atoms constituting a ring and at the same time, carbon atoms constituting the main chain of the polymer.

As specific examples for the compound (a1), the following compounds (a1-1) to (a1-3), etc. may be mentioned. Among them, from the viewpoint of the membrane strength and durability, the compound (a1-1) i.e. perfluoro(3-butenyl vinyl ether) is particularly preferred.

CF₂=CF-O-CF₂-CF₂-CF=CF₂ (a1-1)

CF₂=CF-O-CF₂-CF=CF₂ (a1-2)

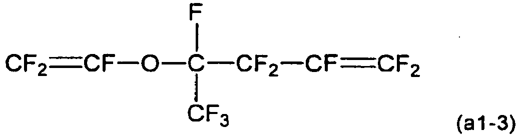

As the perfluorodiene, one type may be used alone, or two or more types may be used in combination.

The fluorinated polymer (A) includes, as the main component, a constituting unit (A1).

Here, "includes, as the main component," indicates that the proportion of the constituting unit (A1) in the fluorinated polymer (A), i.e. the proportion of the constituting unit (A1) occupying in all constituting units constituting the fluorinated polymer (A), is at least 80 mol%.

The proportion of the constituting unit (A1) in the fluorinated polymer (A) is preferably at least 80 mol%, more preferably at least 90 mol%, particularly preferably 100 mol%. At least the above lower limit value is preferred from the viewpoint of transparency. It is particularly preferred that the fluorinated polymer (A) is composed solely of the unit (A1).

The fluorinated polymer (A) may contain a constituting unit (hereinafter referred to also as a "unit (A2)") other than the constituting unit (A1). The constituting unit (A2) may be a constituting unit derived from a compound (hereinafter referred to also as a "compound (a2)") copolymerizable with a perfluorodiene having one etheric oxygen atom.

However, the proportion of the constituting unit (A2) is at most 20 mol%, preferably from 0 to 20 mol%, particularly preferably from 0 to 10 mol%, in all constituting units of the fluorinated polymer (A).

From the viewpoint of transparency and membrane strength, the constituting unit (A2) preferably includes a constituting unit (hereinafter referred to also as a "constituting unit (A2-1)") derived from a fluorinated compound (hereinafter referred to also as a "compound (a2-1)") represented by the following formula (a2-1).

The constituting unit (A2-1) is represented by the following formula (A2-1).

F₂C=CFX¹ (a2-1)

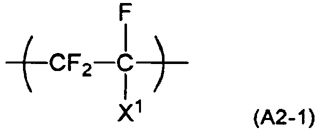

In the formulae (a2-1) and (A2-1), X¹ is a fluorine atom, a C₁₋₈ perfluoroalkyl group or a C₁₋₈ perfluoroalkoxy group.

Specific examples of the compound (a2-1) include tetrafluoroethylene, hexafluoropropylene, perfluoro(propyl vinyl ether), etc.

The fluorinated polymer (A) may have a functional group. The above-mentioned polymer (A^{C}) is a fluorinated polymer (A) having such a functional group. The functional group includes, for example, a carboxy group, an alkoxycarbonyl group, an aminoalkyl group, a halogenocarbonyl group, an acid anhydride group formed by dehydration-condensation of two carboxy groups in one molecule, a hydroxy group, a sulfo group, an epoxy group, a cyano group, a carbonate group, an isocyanate group, an amido group, an aldehyde group, an amino group, a hydrolysable silyl group, a carbon-carbon double bond, an alkoxy group and an acyl group.

The hydrolysable silyl group is a group having an alkoxy group, an amino group, a halogen atom, etc. bonded to a silicon atom and is a group cross-linkable by forming a siloxane bond by hydrolysis.

The alkoxycarbonyl group may, for example, be a methoxycarbonyl group, an ethoxycarbonyl group, a propoxycarbonyl group, an isopropoxycarbonyl group, a butoxycarbonyl group or a tert-butoxycarbonyl group.

The aminoalkyl group may, for example, be an aminoethyl group or an aminopropyl group.

In a case where the fluorinated polymer (A) has a functional group, the functional group may be present at a terminal of the main chain, or may be present in a side chain portion, i.e. in a constituting unit.

The functional group which the fluorinated polymer (A) has, may be of one type, or two or more types.

As the functional group, a functional group selected from the group consisting of a carboxy group, an alkoxycarbonyl group and an aminoalkyl group is preferred, and a carboxy group is particularly preferred.

The fluorinated polymer (A^{C}) is preferably a fluorinated polymer (A) having at least one functional group selected from the group consisting of a carboxy group, an alkoxycarbonyl group and an aminoalkyl group, particularly preferably a fluorinated polymer (A) having a carboxy group.

As methods for introducing a functional group, the following methods (i) to (iv) may be mentioned.
(i) Polymerization is carried out by using a polymerization initiator, and a resulting unstable terminal group is decomposed by e.g. heat treatment to form a carbonyl fluoride group (-CF=O group) at the terminal. Further, by applying post-treatment to the group, it is possible to introduce another functional group to the terminal of the main chain. Specifically, a carbonyl fluoride group may be converted to a carboxy group by hydrolysis. Further, an alcohol may be reacted thereto to convert it to an alkoxycarbonyl group.
(ii) A monomer having a functional group may be copolymerized to introduce the functional group to a side chain portion.
(iii) At the time of polymerization, a polymerization initiator, chain extender, etc. having a functional group may be employed to introduce the functional group to a terminal of the main chain.
(iv) To a fluorinated polymer, a compound (graft-feasible compound) having a functional group and a graft-feasible functional group (such as an unsaturated bond) may be grafted.

Two or more of the methods (i) to (iv) may be used in combination.

In a case where a carboxy group is to be introduced into a fluorinated polymer, the method (i) is preferred as the introduction method.

The fluorinated polymer (A) may not have the above functional group. The above-mentioned fluorinated polymer (A^{F}) is a fluorinated polymer (A) having no functional group. The fluorinated polymer (A^{F}) having no functional group may be produced by e.g. a method of converting an unstable terminal group in a polymer to a stable terminal group or a method of converting a functional group in a polymer to an inactive group. Especially in a case where polymerization is carried out by using a polymerization initiator or chain extender not having the above-mentioned functional group and an unstable terminal group is formed, it is preferred to convert the unstable terminal group to a stable terminal group to obtain a fluorinated polymer (A^{F}).

The mass average molecular weight (Mw) of the fluorinated polymer (A) is preferably from 50,000 to 1,000,000, particularly preferably from 50,000 to 500,000. When it is at least the lower limit value in the above range, the membrane strength of the membrane 5 will be good, and when it is at most the upper limit value in the above range, the solubility of the membrane 5 in a fluorinated solvent will be good, and the productivity will be excellent.

Mw of the fluorinated polymer (A) is a value measured by a gel permeation chromatography (GPC) method. Or, it may be assumed from an intrinsic viscosity value by an intrinsic viscosity method using a flow-down system viscosity tube.

The fluorinated polymer (A) may be synthesized by a known method. For example, it may be synthesized by homopolymerizing a compound (a1). As the polymerization method, radical polymerization may be employed. That is, the means for polymerization is not limited at all so long as the polymerization thereby radically proceeds, and for example, polymerization by means of an organic or inorganic radical initiator, light, electromagnetic radiation or heat, may be mentioned. As the polymerization method, bulk polymerization, solution polymerization, suspension polymerization or emulsion polymerization may, for example, be employed.

### <Fluorinated polymer (B)>

The fluorinated polymer (B) is a fluorinated polymer that includes, as the main component, a constituting unit including a fluorinated aliphatic ring structure having two or three etheric oxygen atoms in the ring structure.

The fluorinated polymer (B) has the above fluorinated aliphatic ring structure, whereby it is excellent in membrane strength and flexibility. Further, it is an amorphous polymer, whereby its transparency is high. The fluorinated polymer (B) is obtainable by polymerizing a fluorinated compound having the above fluorinated aliphatic ring structure. As compared with the above-described fluorinated polymer (A), the fluorinated polymer (B) is poor in flexibility.

Further, the fluorinated aliphatic ring structure is preferably a perfluoro-aliphatic ring.

The number of atoms constituting the ring skeleton of the fluorinated aliphatic ring is preferably from 4 to 7, particularly preferably from 5 to 6. That is, the fluorinated aliphatic ring is preferably a 4- to 7-membered ring, particularly preferably a 5- to 6-membered ring.

The fluorinated aliphatic ring is preferably a fluorinated aliphatic ring of a dioxole structure or a dioxolane structure as an aliphatic ring containing two etheric oxygen atoms in its ring structure.

The fluorinated polymer (B) is preferably one that includes a constituting unit derived from a fluorinated compound having a polymerizable double bond and a fluorinated aliphatic ring structure having two or three etheric oxygen atoms in the ring structure.

In such a fluorinated compound, it is preferred that the two carbon atoms constituting the polymerizable double bond are both contained in the ring structure, or one of them is contained in the ring structure and the other is not contained in the ring structure. The two carbon atoms constituting such a double bond will be carbon atoms constituting the main chain of a polymer. Accordingly, in a constituting unit derived from a fluorinated compound having a polymerizable double bond in a ring, the adjacent two carbon atoms constituting the ring are, at the same time, carbon atoms to constitute the main chain of a polymer, and in a constituting unit derived from a fluorinated compound having a polymerizable double bond between a carbon atom constituting a ring and a carbon atom outside the ring, one carbon atom constituting the ring is, at the same time, a carbon atom to constitute the main chain of a polymer.

As such a fluorinated compound, preferred is a compound having a fluorinated aliphatic ring structure that has two etheric oxygen atoms in the ring structure, and particularly preferred is a compound having a dioxole structure or a dioxolane structure.

From the viewpoint of water repellency, the fluorinated polymer (B) preferably contains at least one member selected from the group consisting of a constituting unit (hereinafter referred to also as a "constituting unit (B1)") derived from a fluorinated compound (hereinafter referred to also as a "compound (b1)") represented by the formula (b1), and a constituting unit (hereinafter referred to also as a "constituting unit (B2)") derived from a fluorinated compound (hereinafter referred to also as a "compound (b2)") represented by the formula (b2). It may contain either one or both of the constituting units (B1) and (B2).

The constituting units (B1) and (B2) are represented by the following formulae (B1) and (B2), respectively.

Further, the following formula (b11) is one wherein the two carbon atoms constituting a double bond in the above formula (b1) are represented by C^{e} and C^{f}, and the following formula (b21) is one wherein the two carbon atoms constituting a double bond in the above formula (b2) are represented by C^{g} and C^{h}. Also in the following formulae (B1) and (B2), the carbon atoms in the constituting units corresponding to such carbon atoms in the formulae (b11) and (b21) are likewise represented by C^{e}, C^{f}, C^{g} and C^{h}.

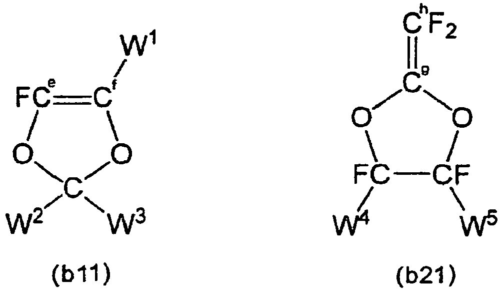

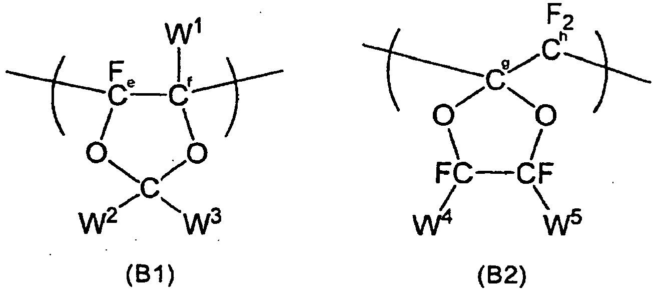

In the formulae (b1) and (B1), W¹ is a fluorine atom, a C₁₋₃ perfluoroalkyl group or a C₁₋₃ perfluroalkoxy group.

Each of W² and W³ which are independent of each other, is a fluorine atom, a C₁₋₆ perfluoroalkyl group, a C₁-₆ perfluoroalkoxy group, or a C₂₋₆ perfluoroalkyl group having an etheric oxygen atom, or W² and W³ are bonded to each other to form a C₂₋₆ perfluoroalkylene group which may have an etheric oxygen atom.

In a case where W² and W³ are bonded to each other, a ring structure is formed by W² and W³, and the carbon atom to which they are bonded. Such a ring structure is preferably a 6-membered ring having two etheric oxygen atoms.

From the viewpoint of water repellency, at least one of W² and W³ is preferably a C₁₋₆ perfluoroalkyl group.

Further, the two carbon atoms C^{e} and C^{f} in the formula (B1) are carbon atoms constituting a ring and at the same time, are carbon atoms constituting the main chain of a polymer.

In the formulae (b2) and (B2), each of W⁴ and W⁵ which are independent of each other, is a fluorine atom, a C₁₋₈ perfluoroalkyl group, a C₁₋₈ perfluoroalkoxy group, or a C₂₋₈ perfluoroalkyl group having an etheric oxygen atom, or W⁴ and W⁵ are bonded to each other to form a C₂₋₆ perfluoroalkylene group which may have an etheric oxygen atom.

In a case where W⁴ and W⁵ are bonded to each other, a ring structure is formed by W⁴ and W⁵, and the carbon atom to which they are bonded. Such a ring structure is preferably a 5-membered ring having one etheric oxygen atom, or a 6-membered ring containing no etheric oxygen atom.

From the viewpoint of water repellency, at least one of W⁴ and W⁵ is preferably a C₁₋₈ perfluoroalkyl group.

Further, the carbon atom C^{g} in the formula (B2) is a carbon atom constituting a ring and at the same time, is a carbon atom constituting the main chain of a polymer.

Specific examples of the compound (b1) include compounds represented by the following formulae (b1-1) to (b1-4), etc. Among them, a compound represented by the formula (b1-1), i.e. perfluoro(2,2-dimethyl-1,3-dioxole), is preferred.

As the compound (b1), one type may be used alone, or two or more types may be used in combination.

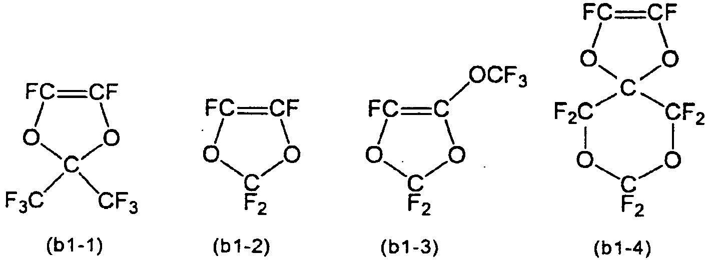

Specific examples of the compound (b2) include perfluoro(2-methylene-1,3-dioxolane represented by the following formula (b2-1), perfluoro(2-methylene-4-methyl-1,3-dioxolane) represented by the following formula (b2-2), etc.

As the compound (b2), one type may be used alone, or two or more types may be used in combination.

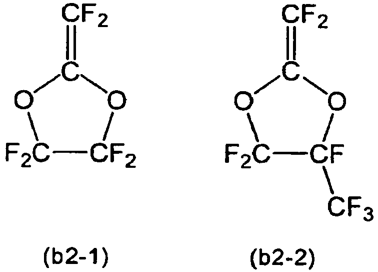

The fluorinated polymer (B) preferably does not have the above-mentioned functional group such as a carboxy group, an alkoxycarbonyl group or an aminoalkyl group. The fluorinated polymer (B) having no functional group is capable of providing better water repellency as compared with a fluorinated polymer (B) having a functional group.

The fluorinated polymer (B) may be a homopolymer, a copolymer, or a mixture of a homopolymer and a copolymer.

The fluorinated polymer (B) preferably contains at least one member selected from the group consisting of the constituting unit (B1) and the constituting unit (B2) in a proportion of at least 10 mol%, more preferably in a proportion of at least 50 mol%, particularly preferably in a proportion of at least 80 mol%, to all constituting units. The upper limit is not particularly limited and may be 100 mol%.

In a case where it contains both the constituting units (B1) and (B2), the total of the constituting units (B1) and (B2) is preferably in a proportion of 10 mol%, more preferably in a proportion of at least 50 mol%, particularly preferably in a proportion of at least 80 mol%. The upper limit is not particularly limited and may be 100 mol%.

In a case where the fluorinated polymer (B) contains the constituting unit (B1), the constituting unit (B1) may be composed solely of one type, or may be composed of two or more types.

In a case where the fluorinated polymer (B) contains the constituting unit (B2), the constituting unit (B2) may be composed solely of one type, or may be composed of two or more types.

In a case where the fluorinated polymer (B) contains the constituting unit (B1) and does not contain the constituting unit (B2), the proportion of the constituting unit (B1) is preferably from 10 to 100 mol%, particularly preferably from 50 to 100 mol%, in all constituting units of the fluorinated polymer (B).

In a case where the fluorinated polymer (B) does not contain the constituting unit (B1) and contains the constituting unit (B2), the proportion of the constituting unit (B2) is preferably from 10 to 100 mol%, particularly preferably from 50 to 100 mol%, in all constituting units of the fluorinated polymer (B).

In a case where the fluorinated polymer (B) contains both the constituting units (B1) and (B2), the proportion of the constituting units (B1) is preferably from 1 to 99 mol%, particularly preferably from 30 to 70 mol%, in all constituting units of the fluorinated polymer (B), and the proportion of the constituting unit (B2) is preferably from 1 to 99 mol%, particularly preferably from 30 to 70 mol%, in all constituting units of the fluorinated polymer (B). In such a case, the molar ratio (B1/B2) of the constituting unit (B1) to the constituting unit (B2) in the fluorinated polymer (B) is preferably from 1/99 to 99/1, particularly preferably from 30/70 to 70/30.

The fluorinated polymer (B) may contain a constituting unit (hereinafter referred to also as other constituting unit) other than the constituting units (B1) and (B2).

The content of such other constituting unit is preferably at most 90 mol%, more preferably at most 50 mol%, particularly preferably at most 20 mol%, to all constituting units.

Such other constituting unit may be a constituting unit derived from a compound (hereinafter referred to also as a "compound (b3)") copolymerizable with the compound (b1) or (b2).

The compound (b3) may, for example, be a chain-form perfluoro compound which has one or more polymerizable double bonds and which may have an etheric oxygen atom, and is preferably one having one polymerizable double bond.

Specifically, such a perfluoro compound includes a perfluoroalkene, a perfluoro(alkyl vinyl ether), etc.

The number of carbon atoms in such a perfluoroalkene or a perfluoro(alkyl vinyl ether) is preferably from 2 to 10, particularly preferably from 2 to 5.

As the compound (b3), a compound (hereinafter referred to also as a "compound (b3-1)") represented by the following formula (b3-1) is preferred.

The constituting unit derived from the compound (b3-1) is represented by the following formula (B3-1).

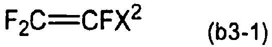

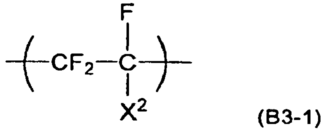

In the formulae (b3-1) and (B3-1), X² is a fluorine atom, a C₁₋₈ perfluoroalkyl group or a C₁₋₈ perfluoroalkoxy group.

The compound (b3-1) includes, for example, tetrafluoroethylene, hexafluoropropylene, a perfluoro(alkyl vinyl ether), etc.

The mass average molecular weight (Mw) of the fluorinated polymer (B) is preferably from 50,000 to 1,000,000, particularly preferably from 50,000 to 500,000. When it is at least the lower limit value in the above range, the membrane-forming property and water repellency of the membrane 5 will be good, and when it is at most the upper limit value in the above range, the membrane strength of the membrane 5 will be good.

Mw of the fluorinated polymer (B) is a value measured by a GPC method, or may be assumed from an intrinsic viscosity value by means of an intrinsic viscosity method using a flow down system viscosity tube.

The fluorinated polymer (B) may be synthesized by a known method. For example, it may be synthesized by homo-polymerizing the compound (b1) or (b2), or by copolymerizing the compounds (b1) and (b2). Further, the fluorinated polymer (B) may also be obtained by copolymerizing the compound (b1) and/or the compound (b2), and the compound (b3).

As the polymerization method, radical polymerization may be employed. That is, the means for polymerization is not limited at all so long as polymerization thereby radically proceeds, and for example, polymerization by means of an organic or inorganic radical initiator, light, ionized radiation or heat, may be mentioned. Also as the method for polymerization, bulk polymerization, solution polymerization, suspension polymerization, emulsion polymerization, etc. may be employed.

### [Process for producing EW device 10]

The EW device may be produced by a known process. For example, it may be produced by preparing a laminate having a first electrode 4 and a membrane 5 sequentially laminated on a substrate 3, installing, on the membrane 5 of the obtained laminate, a side wall member (not shown) extending from the peripheral portion of the membrane 5 vertically to the surface of the membrane 5, introducing, from an opening thereabove, a first fluid 1 and a second fluid 2, and sealing the opening with a upper substrate member (not shown) having a second electrode 7 formed on one side thereof. In this case, a space 6 is formed by the membrane 5, the side wall member and the upper substrate member.

The method for forming a first electrode 4 on the substrate 3 is not particularly limited, and a method known as a method for forming an electrically-conductive thin film, such as a physical vapor deposition method or an electroless plating process, may be employed.

The physical vapor deposition method may, for example, be a sputtering method, a vacuum vapor deposition method or an ion plating method.

The electroless plating method is a method wherein a substrate having a catalyst deposited on its surface is immersed in an electroless plating liquid containing a metal salt, a reducing agent, etc., so that by a reducing force of electrons formed from the reducing agent, a metal is selectively precipitated on the substrate surface having the catalyst deposited thereon to form an electroless plating layer.

The metal salt contained in the electroless plating liquid may, for example, be a nickel salt (such as nickel sulfate, nickel chloride or nickel hypophosphite), a cupric salt (such as copper sulfate, copper chloride or copper pyrophosphate), a cobalt salt (such as cobalt sulfate or cobalt chloride), or a noble metal salt (such as chloroplatinic acid, chloroauric acid, diammine dinitro platinum or silver nitrate).

The reducing agent contained in the electroless plating liquid may, for example, be sodium hypophosphite, formaldehyde, sodium tetrahydroborate, a dialkylamine borane or hydrazine.

In a case where the first electrode 4 is formed by the electroless plating method, it is preferred that a catalyst is preliminarily deposited on the surface of the substrate 3 before forming the first electrode 4. Such a catalyst may, for example, be fine metal particles, fine particles having a metal supported thereon, a colloid or an organic metal complex.

The formed electrically-conductive thin film may be subjected to patterning. Patterning of the electrically-conductive thin film may be carried out, for example, by a combination of a photolithography method and a wet etching method, or by formation of wiring by printing with e.g. a nanometal ink. For example, patterning by a combination of a photolithography method and a wet etching method may be carried out by applying a photoresist on the electrically-conductive thin film to form a resist film, then, subjecting the resist film to exposure and development to form a pattern (resist mask), and by using the resist mask as a mask, etching the electrically-conductive thin film. Etching of the electrically-conductive thin film may be carried out, for example, by wet etching using, as an etching liquid, a liquid (usually an acidic solution) to dissolve the electrically-conductive thin film. Further, as a method of printing with e.g. a nanometal ink, a screen printing method, an ink jet method or a microcontact printing method may, for example, be used. The nanometal ink is meant for an ink having nanoparticles of the above-mentioned electrically-conductive material dispersed in e.g. an organic solvent or water.

As a method for forming a membrane 5 on a first electrode 4, a method for forming a usual single layer or multilayer coating membrane may be employed. For example, a laminate having a first electrode 4 and a membrane 5 sequentially laminated on a substrate 3 is obtainable by carrying out once or repeating plural times the following steps (Ia) and (Ib) depending upon the layer construction (the materials for layers, the number of layers, the lamination order, etc.) of the membrane 5 to be formed.
(Ia) A step of preparing a solution composition by dissolving materials (the fluorinated polymer (A), the fluorinated polymer (B), the silane coupling agent, etc.) to constitute a layer, in a solvent.
(Ib) A step of applying the solution composition prepared in the above step (Ia) on the substrate 3 having the first electrode 4 formed thereon to form a coating film, followed by drying the coating film to form a layer.

Here, in the step (Ib) in the second or subsequent time, the solution composition is applied on the layer formed in the preceding step (Ib).

In a case where the solution composition is for forming a layer (M) or (A), i.e. in a case where it contains a fluorinated polymer, a fluorinated solvent is preferably used as the solvent.

The fluorinated solvent is not particularly limited so long as it is one to dissolve the fluorinated polymer (the fluorinated polymer (A) or (B)) to be used. For example, a perfluoro compound may be used. Specific examples of the perfluoro compound include perfluorotributylamine, perfluorotripropylamine, perfluorotripentylamine, perfluorooctane, perfluorodecane, perfluorohexane, perfluorobenzene, perfluoro-2-butyltetrahydrofuran, perfluorodecalin, etc.

Specific examples of the fluorinated solvent other than the perfluoro compound include decafluoro-3-methoxy-4-trifluoropentane, 1-ethoxy-nonafluorobutane, 1-methoxy-nonafluorobutane, 1,1,2,2-tetrafluoroethyl-2,2,2-trifluoroethyl ether, 1-hydrotridecafluorohexane, nonafluorohexane, 1,1,2,2,3,3,4-heptafluorocyclopentane, methyltridecafluorohexyl ether, 1,1,1,2,2-pentafluoro-3,3-dichloropropane, 1,1,2,2,3-pentafluoro-1,3-dichloropropane, etc.

The fluorinated solvent to be used for the composition for forming the layer (M), and the fluorinated solvent to be used for the composition for forming the layer (A), may be the same or different.

Each of the concentration in total of fluorinated polymers (A) and (B) in the solution composition for forming the layer (M) and the concentration of the fluorinated polymer (A) in the solution composition for forming the layer (A), is preferably from 1 to 13 mass%. By adjusting the concentration of the polymer, it is possible to obtain a thin film having a desired thickness.

The solution composition may contain, in addition to the fluorinated polymer and the fluorinated solvent, a silane coupling agent as the case requires.

In a case where the solution composition is for forming a silane coupling agent layer, i.e. in a case where it contains a silane coupling agent and does not contain the fluorinated polymer (A) or (B), the solvent is not particularly limited so long as it is capable of dissolving the silane coupling agent. For example, methanol, ethanol, isopropyl alcohol, isobutyl alcohol, ethyl acetate, butyl acetate, water, etc. may be mentioned.

The concentration of the silane coupling agent in the solution composition for forming a silane coupling agent layer, is preferably from 0.01 to 10 mass%.

As the coating method for the solution composition, a method of forming a film from a solution may be used. For example, a roll coating method, a casting method, a dip coating method, a spin coating method, a casting on water method, a die coating method or a Langmuir-Blodgett method may, for example, be mentioned. In a case where a very strict film thickness formation is required, a spin coating method is preferred.

The coating amount is set depending upon the thickness of the layer to be formed.

Drying of the coating film may be carried out at room temperature by drying in air or under reduced pressure.

In the case of forming a layer (M) or (A), it is preferred to reduce the pressure after drying in air at room temperature to remove a solvent remaining in the film. The vacuuming degree at the time of reduced pressure is preferably at most 1 Pa (absolute pressure), particularly preferably at most 10⁻³ Pa (absolute pressure). The temperature at the time of reduced pressure is preferably from the glass transition temperature of the fluorinated polymer to 250°C, particularly preferably from 40 to 210°C.

Drying of the coating film is preferably carried out until the solvent is no longer detected. The smaller the amount of the solvent remaining in the film, the better the adhesion and durability.

In the foregoing, an embodiment of the EW device of the present invention has been described with reference to Figs. 1 and 2, but the present invention is by no means limited thereto, and any construction of a known EW device may be employed except that the specific construction is used for the membrane in contact with the space for containing the two types of fluids.

For example, in the above embodiment, a case has been shown wherein, as one (first fluid 1) of the two types of fluids, a transparent electrically-conductive aqueous liquid is used, and, as the other (second fluid 2), a colored non-conductive oily fluid is used, but the combination of the first fluid 1 and the second fluid 2 is not limited thereto.

The two types of fluids may be ones which are separated into two phases as immiscible to each other to form an interface in the space, and any combination heretofore used in an electrowetting device may be employed. For example, in the case of an application to a display device, a combination of a colored oily liquid and a transparent aqueous liquid, a combination of an aqueous liquid and an oily liquid, which are colored to have different colors, respectively, or a combination of a colored aqueous liquid and a gas (such as air or an inert gas) may, for example, be employed.

Further, a case has been shown wherein the substrate 3, the first electrode 4 and the membrane 5 are, respectively, flat, but they may not be flat. For example, a concave portion may be provided so that the second fluid 2 may be contained in the concave portion.

### EXAMPLES

Now, specific examples of the above embodiment will be described as Examples of the present invention. However, it should be understood that the present invention is by no means limited to the following Examples.

Among the following Ex. 1 to 5, the membranes obtained in Ex. 1 to 3 correspond to membranes in the present invention, and the membranes obtained in Ex. 4 to 5 are comparative products.

The thickness of a layer formed in each of the following Ex. was measured by Dektak XT (trade name, manufactured by ULVAC, Inc.).

Further, materials used in each of the following Ex. are as follows.

### <Fluorinated polymer (A)>

CTX-803A: trade name, manufactured by Asahi Glass Company, Limited, a solution wherein a fluorinated polymer which is a homopolymer obtained by cyclopolymerizing perfluoro(3-butenyl vinyl ether) and which has a carboxy group, is diluted with a fluorinated solvent CT-solv180 (trade name, manufactured by Asahi Glass Company, Limited) to a concentration of 3 mass%.

CTX-809S: trade name, manufactured by Asahi Glass Company, Limited, a solution wherein a fluorinated polymer which is a homopolymer obtained by cyclopolymerizing perfluoro(3-butenyl vinyl ether) and which has no functional group, is diluted with a fluorinated solvent CT-solv180 (trade name, manufactured by Asahi Glass Company, Limited) to a concentration of 9 mass%.

### <Fluorinated polymer (B)>

### Fluorinated polymer (B-1): Synthesized product synthesized by the following procedure

1.5 g of perfluoro(2-methylene-4-methyl-1,3-dioxolane) and 21.7 g of ASAHIKLIN AC-2000 (trade name, manufactured by Asahi Glass Company, Limited, tridecafluorohexane) were charged into a 0.1 L pressure-resistant container. To the pressure-resistant container, as a polymerization initiator, bis(heptafluorobutylyl) peroxide (PFB) was added in the form of a 3 mass% solution in ASAHIKLIN AK-225 (trade name, manufactured by Asahi Glass Company, Limited, a mixture of 3,3-dichloro-1,1,1,2,2-pentafluoropropane and 1,3-dichloro-1,1,2,2,3-pentafluoropropane). Inside of the system was evacuated, and then 1.0 g of tetrafluoroethylene was fed and polymerized at 40°C for 3 hours. After the polymerization, the reaction solution was dropwise added into methanol to reprecipitate the polymer, followed by vacuum drying at 100°C for 12 hours and at 200°C for 1 hour and heat treatment at 300°C for 1 hour to obtain a fluorinated polymer (B-1).

### <Silane coupling agent>

KBE903: trade name, manufactured by Shin-Etsu Chemical Co., Ltd., 3-aminopropyltriethoxy silane

### <Mixed liquid for forming layer (M)>

Mixed liquid M1: one obtained by mixing CTX-809S and a solution (hereinafter referred to as the "(B-1) solution") having the fluorinated polymer (B-1) diluted to a concentration of 3 mass% with perfluorotributylamine, so that the mass ratio of fluorinated polymer (A)/fluorinated polymer (B) would be 20/80.

Mixed liquid M2: one obtained by mixing CTX-809S and the (B-1) solution so that the mass ratio of fluorinated polymer (A)/fluorinated polymer (B) would be 50/50.

Mixed liquid M3: one obtained by mixing CTX-809S and the (B-1) solution so that the mass ratio of fluorinated polymer (A)/fluorinated polymer (B) would be 80/20.

### [Ex.1]

To a glass substrate (soda glass), a solution having KBE903 diluted with ethanol to a concentration of 0.05 mass%, was applied by spin coating and dried in air to form a silane coupling agent layer having a thickness of 5 nm.

Then, CTX-803A was applied by spin coating and dried for 30 minutes in a 100°C oven to form a layer (A^{C}) having a thickness of 0.2 µm.

Then, CTX-809S was applied by spin coating and dried for 30 minutes in a 100°C oven to form a layer (A^{F}) having a thickness of 1 µm.

Then, the mixed liquid M1 was applied by spin coating and dried for 30 minutes in a 200°C oven to form a layer (M) having a thickness of 0.2 µm, thereby to obtain a laminate (glass substrate/silane coupling agent layer/layer (A^{C})/layer (A^{F})/layer (M)).

### [Ex.2]

A laminate was obtained in the same manner as in Ex. 1 except that instead of the mixed liquid M1, the mixed liquid M2 was used.

### [Ex.3]

A laminate was obtained in the same manner as in Ex. 1 except that instead of the mixed liquid M1, the mixed liquid M3 was used.

### [Ex. 4]

To a glass substrate (soda glass), a solution having KBE903 diluted with ethanol to a concentration of 0.05 mass%, was applied by spin coating and dried in air to form a silane coupling agent layer having a thickness of 5 nm.

Then, CTX-809S was applied by spin coating and dried for 30 minutes in a 200°C oven to form a layer (A^{F}) having a thickness of 1 µm thereby to obtain a laminate (glass substrate/silane coupling agent layer/layer (A^{F})).

### [Ex. 5]

A laminate (glass substrate/silane coupling agent layer/layer (B)) was obtained in the same manner as in Ex. 4 except that instead of CTX-809S, the (B-1) solution was used.

With respect to the laminate obtained in each Ex., the dynamic sweepback angle, membrane strength and durability in warm water were evaluated in the following procedures. The results are shown in Table 1.

Dynamic sweepback angle: With respect to the laminate immediately after the preparation (initial), the dynamic sweepback angle of the membrane surface (the opposite side from the glass substrate side) to pure water (40 µL) was measured by an expansion-and-contraction method by means of DM-500 manufactured by Kyowa Interface Science Co., Ltd. (measuring temperature: 23°C).

Membrane strength: By means of Dusper Y-1 manufactured by OZU CORPORATION, the membrane surface was abraded by three reciprocations in a horizontal direction under a load of 100 g, whereupon the outer appearance of the membrane was visually confirmed. The results are shown in Table 1.

Durability in warm water: The laminate was immersed in water of 50°C for 200 hours. The laminate was taken out of the water, and the membrane surface was dried by air purging, whereupon the dynamic sweepback angle of the membrane was measured by the same procedure as described above. Further, from the measured results, a change in the dynamic sweepback angle (dynamic sweepback angle after immersion - dynamic sweepback angle before immersion) was calculated. The results are shown in Table 1.

**TABLE 1**

| | Dynamic sweepback angle (initial) | Membrane strength | Durability in warm water | |
|---|---|---|---|---|
| | | | Dynamic sweepback angle | Change in the angle |
| Ex. 1 | 115° | Slight scar observed | 115° | 0° |
| Ex. 2 | 115° | No change | 114° | -1° |
| Ex. 3 | 115° | No change | 113° | -2° |
| Ex. 4 | 100° | Detachment observed | 95° | -5° |
| Ex. 5 | 114° | Detachment observed | 105° | -9° |

As the above results show, the membrane formed in each of Ex. 1 to 3 had excellent water repellency, as the value of the initial dynamic sweepback angle exceeded 110°. Further, the membrane strength was also good. It was excellent also in durability, and deterioration in water repellency during immersion in warm water was prevented.

Whereas, the membrane in Ex. 4 wherein the outermost layer was made solely of the fluorinated polymer (A) was inferior in water repellency as compared the membranes in Ex. 1 to 3. Further, the water repellency substantially decreased during immersion in warm water.

The membrane in Ex. 5 wherein the outermost layer was made solely of the fluorinated polymer (B), had low membrane strength, although it had excellent water repellency, as the value of the initial dynamic sweepback angle exceeded 110°. Further, the durability was low, and the water repellency substantially decreased during immersion in warm water.

### INDUSTRIAL APPLICABILITY

The EW device of the present invention can be used for a display device, a lens, a micropump, etc. and is particularly suitable for a display device or a lens.

The display device is not particularly limited so long as it is a display device of electrowetting system, and it may, for example, be an electron paper display (such as transmissive type, reflective type or semi-transmissive type), an electronic bulletin board, an electronic public notice, an electronic book, a tablet, a cell-phone or a digital camera.

The lens is not particularly limited so long as it is a lens of electrowetting system, and, for example, it may be a varifocal liquid lens.

### REFERENCE SYMBOLS

1: first fluid, 2: second fluid, 3: substrate, 4: first electrode, 5: membrane, 6: space, 7: second electrode, 10: electrowetting device

## Claims

1. An electrowetting device comprising a space to contain fluids, two types of fluids that form an interface in the space, a membrane that is in contact with the space, a first electrode disposed on the opposite side of the membrane from the side in contact with the space, and a second electrode that is in contact with one of the two types of fluids, wherein said membrane is a single membrane consisting of a layer (M) "**characterized by** the layer (M)" made of a mixture of a fluorinated polymer (A) that includes, as the main component, a constituting unit including a fluorinated aliphatic ring structure having one etheric oxygen atom in the ring structure, and a fluorinated polymer (B) that includes, as the main component, a constituting unit including a fluorinated aliphatic ring structure having two or three etheric oxygen atoms in the ring structure, or a multilayer membrane wherein said layer (M) is disposed as the outermost layer on the side in contact with the space.

2. The electrowetting device according to Claim 1, wherein each of the fluorinated polymer (A) and the fluorinated polymer (B) is a fluorinated polymer containing the respective fluorinated aliphatic ring on its main chain.

3. The electrowetting device according to Claim 1 or 2, wherein in the layer (M), the mass ratio (A/B) of the fluorinated polymer (A) to the fluorinated polymer (B) is from 10/90 to 99/1.

4. The electrowetting device according to any one of Claims 1 to 3, wherein the constituting unit including a fluorinated aliphatic ring structure in the fluorinated polymer (A) is a constituting unit obtained by cyclopolymerizing a perfluorodiene having one etheric oxygen atom.

5. The electrowetting device according to Claim 4, wherein the perfluorodiene having one etheric oxygen atom is a fluorinated compound represented by the following formula (a1): 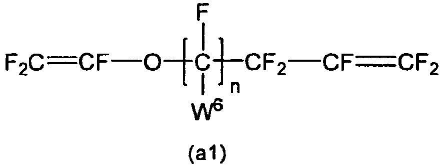 wherein W⁶ is a fluorine atom or a C₁₋₃ perfluoroalkyl group, and n is 0 or 1.

6. The electrowetting device according to any one of Claims 1 to 5, wherein said membrane is the multilayer membrane which further contains a layer (A) made of said fluorinated polymer (A).

7. The electrowetting device according to Claim 6, wherein the fluorinated polymer (A) constituting the layer (A) is a fluorinated polymer (A^{C}) having at least one type of functional group selected from the group consisting of a carboxy group, an alkoxycarbonyl group and an aminoalkyl group.

8. The electrowetting device according to Claim 7, wherein the membrane contains a plurality of the layers (A), at least one layer among them is a layer (A^{C}) made of the fluorinated polymer (A^{C}), at least one other layer is a layer (A^{F}) made of a fluorinated polymer (A^{F}) that is a fluorinated polymer (A) having no functional group, and the layer (A^{F}) is disposed between the layer (A^{C}) and the layer (M).

9. The electrowetting device according to any one of Claims 1 to 8, wherein the constituting unit including a fluorinated aliphatic ring structure in the fluorinated polymer (B) is a constituting unit obtained by polymerizing a monomer having a fluorinated aliphatic ring structure that has two oxygen atoms as atoms constituting the ring, wherein at least one carbon atom constituting the ring is a carbon atom constituting a polymerizable double bond.

10. The electrowetting device according to Claim 9, wherein the monomer having a fluorinated aliphatic ring structure is a fluorinated compound represented by the following formula (b1) or a fluorinated compound represented by the following formula (b2): 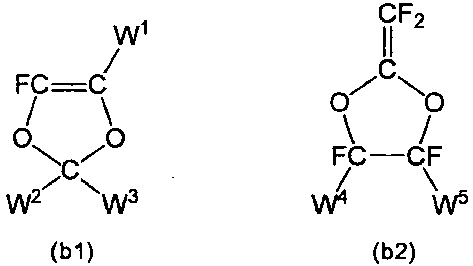 wherein W¹ is a fluorine atom, a C₁₋₃ perfluoroalkyl group or a C₁₋₃ perfluoroalkoxy group, each of W² and W³ which are independent of each other, is a fluorine atom, a C₁₋₆ perfluoroalkyl group, a C₁₋₆ perfluoroalkoxy group or a C₂₋₆ perfluoroalkyl group having an etheric oxygen atom, or W² and W³ are bonded to each other to form a C₂₋₆ perfluoroalkylene group which may have an etheric oxygen atom, and each of W⁴ and W⁵ which are independent of each other, is a fluorine atom, a C₁₋₈ perfluoroalkyl group, a C₁₋₈ perfluoroalkoxy group or a C₂₋₈ perfluoroalkyl group having an etheric oxygen atom, or W⁴ and W⁵ are bonded to each other to form a C₂₋₆ perfluoroalkylene group which may have an etheric oxygen atom.

11. The electrowetting device according to Claim 10, wherein the fluorinated compound represented by the formula (b1) is perfluoro(2,2-dimethyl-1,3-dioxole), and the fluorinated compound represented by the formula (b2) is perfluoro(2-methylene-1,3-dioxolane) or perfluoro(2-methylene-4-methyl-1,3-dioxolane).

12. The electrowetting device according to any one of Claims 1 to 11, wherein the thickness of the membrane is from 0.2 to 6 µm.

13. A display device provided with the electrowetting device as defined in any one of Claims 1 to 12.

14. A lens provided with the electrowetting device as defined in any one of Claims 1 to 12.

## Patentansprüche

1. Elektrobenetzungsvorrichtung, umfassend einen Raum zum Enthalten von Flüssigkeiten, zwei Flüssigkeitsarten, die eine Grenzfläche in dem Raum bilden, eine Membran, die in Kontakt mit dem Raum ist, eine erste Elektrode, die auf der gegenüberliegenden Seite der Membran von der mit dem Raum in Kontakt befindlichen Seite angeordnet ist, und eine zweite Elektrode, die in Kontakt mit einer der beiden Flüssigkeitsarten ist, wobei die Membran eine Einzelmembran ist, bestehend aus einer Schicht (M), **dadurch gekennzeichnet, dass** die Schicht (M) aus einem Gemisch eines fluorierten Polymers (A), das als die Hauptkomponente eine konstituierende Einheit, enthaltend eine fluorierte aliphatische Ringstruktur mit einem etherischen Sauerstoffatom in der Ringstruktur, einschließt, und eines fluorierten Polymers (B), das als die Hauptkomponente eine konstituierende Einheit, enthaltend eine fluorierte aliphatische Ringstruktur mit zwei oder drei etherischen Sauerstoffatomen in der Ringstruktur, einschließt, hergestellt ist, oder eine Mehrschichtmembran ist, wobei die Schicht (M) als die äußerste Schicht auf der mit dem Raum in Kontakt befindlichen Seite angeordnet ist.

2. Elektrobenetzungsvorrichtung nach Anspruch 1, wobei jedes von dem fluorierten Polymer (A) und dem fluorierten Polymer (B) ein fluoriertes Polymer ist, das den jeweiligen fluorierten aliphatischen Ring auf seiner Hauptkette enthält.

3. Elektrobenetzungsvorrichtung nach Anspruch 1 oder 2, wobei in der Schicht (M) das Massenverhältnis (A/B) des fluorierten Polymers (A) zu dem fluorierten Polymer (B) von 10/90 bis 99/1 beträgt.

4. Elektrobenetzungsvorrichtung nach einem der Ansprüche 1 bis 3, wobei die konstituierende Einheit, enthaltend eine fluorierte aliphatische Ringstruktur, in dem fluorierten Polymer (A) eine konstituierende Einheit ist, die durch Cyclo-polymerisation eines Perfluordiens mit einem etherischen Sauerstoffatom erhalten wird.

5. Elektrobenetzungsvorrichtung nach Anspruch 4, wobei das Perfluordien mit einem etherischen Sauerstoffatom eine durch die nachstehende Formel (a1) dargestellte fluorierte Verbindung ist: 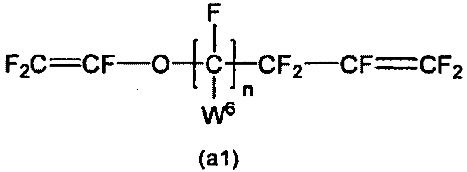 wobei W⁶ ein Fluoratom oder eine C₁₋₃-Perfluoralkylgruppe ist und n 0 oder 1 ist.

6. Elektrobenetzungsvorrichtung nach einem der Ansprüche 1 bis 5, wobei die Membran die Mehrschichtmembran ist, welche weiter eine aus dem fluorierten Polymer (A) hergestellte Schicht (A) enthält.

7. Elektrobenetzungsvorrichtung nach Anspruch 6, wobei das fluorierte Polymer (A), das die Schicht (A) konstituiert, ein fluoriertes Polymer (A^{C}) mit mindestens einer funktionellen Gruppenart, ausgewählt aus der Gruppe, bestehend aus einer Carboxylgruppe, einer Alkoxycarbonylgruppe und einer Aminoalkylgruppe, ist.

8. Elektrobenetzungsvorrichtung nach Anspruch 7, wobei die Membran eine Mehrzahl der Schichten (A) enthält, mindestens eine Schicht unter ihnen eine aus dem fluorierten Polymer (A^{C}) hergestellte Schicht (A^{C}) ist, mindestens eine andere Schicht eine aus einem fluorierten Polymer (A^{F}), das ein fluoriertes Polymer (A) ohne funktionelle Gruppe ist, hergestellte Schicht (A^{F}) ist, und die Schicht (A^{F}) zwischen der Schicht (A^{C}) und der Schicht (M) angeordnet ist.

9. Elektrobenetzungsvorrichtung nach einem der Ansprüche 1 bis 8, wobei die konstituierende Einheit, enthaltend eine fluorierte aliphatische Ringstruktur, in dem fluorierten Polymer (B) eine konstituierende Einheit ist, die durch Polymerisation eines Monomers mit einer fluorierten aliphatischen Ringstruktur, die zwei Sauerstoffatome als Atome, die den Ring konstituieren, aufweist, erhalten wird, wobei mindestens ein Kohlenstoffatom, das den Ring konstituiert, ein Kohlenstoffatom ist, das eine polymerisierbare Doppelbindung konstituiert.

10. Elektrobenetzungsvorrichtung nach Anspruch 9, wobei das Monomer mit einer fluorierten aliphatischen Ringstruktur eine durch die nachstehende Formel (b1) dargestellte fluorierte Verbindung oder eine durch die nachstehende Formel (b2) dargestellte fluorierte Verbindung ist: 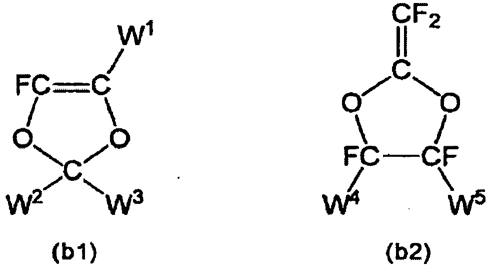 wobei W¹ ein Fluoratom, eine C₁₋₃-Perfluoralkylgruppe oder eine C₁₋₃-Perfluoralkoxygruppe ist, jedes von W² und W³, welche unabhängig voneinander sind, ein Fluoratom, eine C₁₋₆-Perfluoralklygruppe, eine C₁₋₆-Perfluoralkoxygruppe oder eine C₂₋₆-Perfluoralkylgruppe mit einem etherischen Sauerstoffatom ist, oder W² und W³ miteinander verbunden sind, um eine C₂₋₆-Perfluoralkylengruppe zu bilden, welche ein etherisches Sauerstoffatom aufweisen kann, und jedes von W⁴ und W⁵, welche unabhängig voneinander sind, ein Fluoratom, eine C₁₋₈-Perfluoralkylgruppe, eine C₁₋₈-Perfluoralkoxygruppe oder eine C₂₋₈-Perfluoralkylgruppe mit einem etherischen Sauerstoffatom ist, oder W⁴ und W⁵ miteinander verbunden sind, um eine C₂₋₆-Perfluoralkylengruppe zu bilden, welche ein etherisches Sauerstoffatom aufweisen kann.

11. Elektrobenetzungsvorrichtung nach Anspruch 10, wobei die durch die Formel (b1) dargestellte fluorierte Verbindung Perfluor-(2,2-dimethyl-1,3-dioxol) ist und die durch die Formel (b2) dargestellte fluorierte Verbindung Perfluor-(2-methylen-1,3-dioxolan) oder Perfluor-(2-methylen-4-methyl-1,3-dioxolan) ist.

12. Elektrobenetzungsvorrichtung nach einem der Ansprüche 1 bis 11, wobei die Dicke der Membran von 0,2 bis 6 µm beträgt.

13. Anzeigevorrichtung, ausgerüstet mit der Elektrobenetzungsvorrichtung nach einem der Ansprüche 1 bis 12.

14. Linse, ausgerüstet mit der Elektrobenetzungsvorrichtung nach einem der Ansprüche 1 bis 12.

## Revendications

1. Dispositif d'électromouillage comprenant un espace servant à contenir des fluides, deux types de fluides qui forment une interface dans l'espace, une membrane qui est en contact avec l'espace, une première électrode disposée sur la face de la membrane opposée à la face en contact avec l'espace, et une seconde électrode qui est en contact avec un des deux types de fluides, dans lequel ladite membrane est une membrane unique constituée par une couche (M), **caractérisée en ce que** la couche (M) est faite d'un mélange contenant un polymère fluoré (A) qui comprend, en tant que composant principal, un motif constitutif possédant une structure cyclique aliphatique fluorée contenant un atome d'oxygène éthérique dans la structure cyclique, et un polymère fluoré (B) qui comprend, en tant que composant principal, un motif constitutif possédant une structure cyclique aliphatique fluorée contenant deux ou trois atomes d'oxygène éthérique dans la structure cyclique, ou une membrane multicouche dans laquelle ladite couche (M) est disposée en tant que couche la plus externe sur la face en contact avec l'espace.

2. Dispositif d'électromouillage selon la revendication 1, dans lequel chacun parmi le polymère fluoré (A) et le polymère fluoré (B) est un polymère fluoré contenant le cycle aliphatique fluoré respectif sur sa chaîne principale.

3. Dispositif d'électromouillage selon la revendication 1 ou 2, dans lequel, dans la couche (M), le rapport massique (A/B) du polymère fluoré (A) sur le polymère fluoré (B) est de 10/90 à 99/1.

4. Dispositif d'électromouillage selon l'une quelconque des revendications 1 à 3, dans lequel le motif constitutif possédant une structure cyclique aliphatique fluorée dans le polymère fluoré (A) est un motif constitutif obtenu par la cyclopolymérisation d'un perfluorodiène contenant un atome d'oxygène éthérique.

5. Dispositif d'électromouillage selon la revendication 4, dans lequel le perfluorodiène contenant un atome d'oxygène éthérique est un composé fluoré représenté par la formule (a1) suivante : 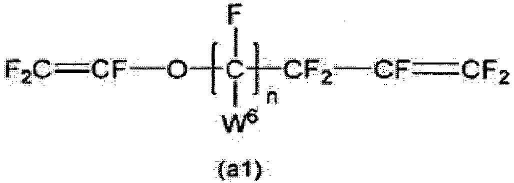 dans laquelle W⁶ est un atome de fluor ou un groupe perfluoroalkyle en C₁ à C₃, et n est 0 ou 1.

6. Dispositif d'électromouillage selon l'une quelconque des revendications 1 à 5, dans lequel ladite membrane est la membrane multicouche qui contient en outre une couche (A) faite dudit polymère fluoré (A).

7. Dispositif d'électromouillage selon la revendication 6, dans lequel le polymère fluoré (A) constituant la couche (A) est un polymère fluoré (A^{C}) contenant au moins un type de groupe fonctionnel choisi dans le groupe constitué par un groupe carboxy, un groupe alcoxycarbonyle et un groupe aminoalkyle.

8. Dispositif d'électromouillage selon la revendication 7, dans lequel la membrane contient une pluralité de couches (A), au moins une couche parmi celles-ci est une couche (A^{C}) faite du polymère fluoré (A^{C}), au moins une autre couche est une couche (A^{F}) faite d'un polymère fluoré (A^{F}) qui est un polymère fluoré (A) ne contenant pas de groupe fonctionnel, et la couche (A^{F}) est disposée entre la couche (A^{C}) et la couche (M).

9. Dispositif d'électromouillage selon l'une quelconque des revendications 1 à 8, dans lequel le motif constitutif possédant une structure cyclique aliphatique fluorée dans le polymère fluoré (B) est un motif constitutif obtenu par la polymérisation d'un monomère possédant une structure cyclique aliphatique fluorée qui contient deux atomes d'oxygène en tant qu'atomes constituant le cycle, dans lequel au moins un atome de carbone constituant le cycle est un atome de carbone constituant une double liaison polymérisable.

10. Dispositif d'électromouillage selon la revendication 9, dans lequel le monomère possédant une structure cyclique aliphatique fluorée est un composé fluoré représenté par la formule (b1) suivante ou un composé fluoré représenté par la formule (b2) suivante : 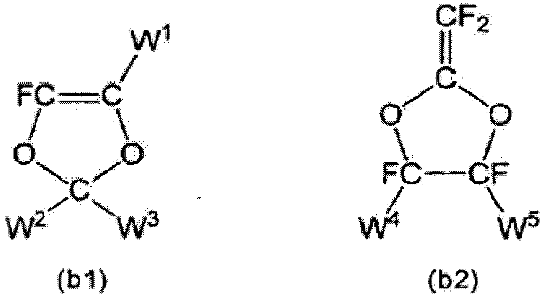 dans lesquelles W¹ est un atome de fluor, un groupe perfluoroalkyle en C₁ à C₃ ou un groupe perfluoroalcoxy en C₁ à C₃, chacun parmi W² et W³ qui sont indépendants l'un par rapport à l'autre, est un atome de fluor, un groupe perfluoroalkyle en C₁ à C₆, un groupe perfluoroalcoxy en C₁ à C₆ ou un groupe perfluoroalkyle en C₂ à C₆ contenant un atome d'oxygène éthérique, ou W² et W³ sont liés l'un à l'autre pour former un groupe perfluoroalkylène en C₂ à C₆ qui peut contenir un atome d'oxygène éthérique, et chacun parmi W⁴ et W⁵ qui sont indépendants l'un par rapport à l'autre, est un atome de fluor, un groupe perfluoroalkyle en C₁ à C₈, un groupe perfluoroalcoxy en C₁ à C₈ ou un groupe perfluoroalkyle en C₂ à C₈ contenant un atome d'oxygène éthérique, ou W⁴ et W⁵ sont liés l'un à l'autre pour former un groupe perfluoroalkylène en C₂ à C₆ qui peut contenir un atome d'oxygène éthérique.

11. Dispositif d'électromouillage selon la revendication 10, dans lequel le composé fluoré représenté par la formule (b1) est le perfluoro(2,2-diméthyl-1,3-dioxole), et le composé fluoré représenté par la formule (b2) est le perfluoro(2-méthylène-1,3-dioxolane) ou le perfluoro(2-méthylène-4-méthyl-1,3-dioxolane).

12. Dispositif d'électromouillage selon l'une quelconque des revendications 1 à 11, dans lequel l'épaisseur de la membrane est de 0,2 à 6 µm.

13. Dispositif d'affichage doté du dispositif d'électromouillage selon l'une quelconque des revendications 1 à 12.

14. Lentille dotée du dispositif d'électro-mouillage selon l'une quelconque des revendications 1 à 12.
